# EUROPEAN PATENT SPECIFICATION

(11) **EP 1 446 361 B1**
(45) Date of publication and mention of the grant of the patent: **09.03.2005**
(21) Application number: 02780184.4
(22) Date of filing: 19.11.2002
(51) Int. Cl.: C03B 37/03

(54) **METHOD OF CHARACTERISING ONE OR MORE PROPERTIES OF OPTICAL FIBRES**
VERFAHREN ZUM KENNZEICHNEN EINER ODER MEHRERER EIGENSCHAFTEN VON OPTISCHEN FASERN
CARACTERISATION D'UNE OU DE PLUSIEURS PROPRIETES DE FIBRES OPTIQUES

(30) Priority: 22.11.2001 NL 1019412
(43) Date of publication of application: 18.08.2004
(73) Proprietor: Draka Fibre Technology B.V., 5651 CA Eindhoven (NL)
(72) Inventor: DE JONGH, Koen, NL-5694 SB Son En Breugel (NL); PLEUNIS, Peter, Johannes, Theodorus, NL-6003 NE Weert (NL)
(74) Representative: Dohmen, Johannes Maria Gerardus
(86) International application number: PCT/NL2002/000751
(87) International publication number: WO 2003/043943

(56) References cited:
- EP-A- 0 970 926
- EP-A- 1 013 618
- PATENT ABSTRACTS OF JAPAN vol. 14, no. 270, 12 June 1990 (1990-06-12) & JP 02 080342 A (FUJIKURA LTD), 20 March 1990 (1990-03-20)

## Description

The present invention relates to a method of characterising one or more properties of optical fibres obtained from an optical preform.

A method of manufacturing optical fibres from a preform is known per se, for example from US patent No 6,260,510 to the present applicant. The preforms that are used with such a method have a diameter of 60 mm or more, and an optical fibre having a total length of more than 200 km can be drawn therefrom. In addition to that, preforms are known from which a total fibre length of 500 or 1000 km is obtained. After the optical fibre has been drawn from the heated preform, it is divided into a number of separate lengths, which may have mutually different dimensions, for example 4, 8, 12, 25 or 50 km. The number of optical fibres obtained from one and the same preform can thus run to more than 100. In the production of such optical fibres, the optical fibre is subjected to a large number of measurements for the purpose of characterising the geometric and optical properties thereof. A number of such properties are measured at the beginning and at the end of the fibre length. The considerable increase in scale in the fibre production processes and the capacity growth will thus lead to a considerable increase of the amount of measurements to be carried out on fibre lengths. In addition, the optical fibre may fracture upon being mechanical tested for tensile strength, resulting in a random fibre length present on the coil, as a result of which separate fibre lengths are obtained, each of which must subsequently be subjected to a measurement of properties.

A method of winding and unwinding a fibre element having different longitudinal portions is known from EP 1 013 618 A.

The object of the present invention is to reduce the number of measurements for characterising the optical fibre that are carried out on an optical fibre during the manufacture thereof.

Another object of the present invention is to provide a method of characterising one or more properties of optical fibres obtained from an optical preform, in which the number of measurements to be carried out is reduced by accurately keeping track of the position of each individual fibre length on the original optical fibre from which the individual fibre lengths are made.

The present invention as referred to in the introduction is characterized in that the method comprises the following steps:
i) drawing an optical fibre from the optical preform,
ii) subdividing the optical fibre from step i) into separate length portions by winding each of said separate length portions on a coil,
iii) encoding each coil from step ii), with each coil comprising a specific length portion of the original optical fibre from step i),
iv) measuring one or more properties of a length portion of an optical fibre whose code as registered in step iii) is known,
v) measuring one or more properties of a random length portion of an optical fibre other than the length portion from step iv), whose code as registered in step iii) is known,
vi) determining one or more properties of one or more of the length portions of optical fibres other than the length portions measured in accordance with steps iv) and v) through mathematical processing of the measuring results obtained in step iv) and the measuring results obtained in step v), and
vii) assigning properties to said other length portions from step vi) on the basis of the mathematical processed measuring data.

Since it is thus known from what position on the original optical fibre a particular length portion originates, it is possible to reduce the number of measurements to be carried out on the final optical fibres, in particular by calculating specific properties from the data of the properties from other length portions. After all, if a specific property of a length portion forming the beginning of the optical fibre and a specific property of a length portion forming the end of said optical fibre, which length portions may be a distance of, for example, 50 km apart, correspond within a predetermined tolerance value, said specific property may also be assigned to any intermediate length portion of the optical fibre. In this manner only two measurements will suffice, and the results obtained can be assigned to all the other length portions.

It is in particular preferable to use an electronic memory storage device in carrying out step iii) and/or step vi).

The use of such an electronic memory storage device, in particular a computer system, is in particular desirable for setting up an accounting system, so that any interpolation of properties can be carried out in a simple manner, thus enabling a significant reduction of the number of measurements that previously needed to be carried out on each optical fibre wound on a coil. In addition, such an electronic memory storage device provides exact information with regard to the location of each individual length portion in the original optical fibre.

In particular embodiments, the optical fibre being drawn is preferably wound on a coil while step i) is being carried out. Such an embodiment thus provides a mother coil on which the total optical fibre length is present. The optical fibre is transferred from the mother coil to a number of daughter coils as needed, which daughter coils are subsequently encoded and provided with random individual fibre lengths, for example 4, 8, 12, 25 or 50 km.

In a special embodiment of the present invention, on the other hand, steps v)-vii) can be substituted for a single step viii), which step viii) comprises the assigning of the properties measured in step iv) to another length portion whose code as registered in step iii) is known and which is adjacent to the length portion from step iv).

With such an embodiment, the properties of an optical fibre present on one coil are assigned to another optical fibre present on another coil, in which the length portion of said one optical fibre was originally adjacent to the length portion of the other optical fibre. The term "original" as used herein is understood to mean the optical fibre before subdivision thereof into separate length portions takes place. In this special embodiment it is thus not necessary to measure the properties of each of the optical fibres present on two different coils, but it suffices to measure the properties of only one optical fibre and to assign the obtained value to the other optical fibre. Under specific circumstances it is possible to assign a property that has been measured only once to all the other individual length portions.

The relevant properties in connection with the present invention include, for single-mode fibres: attenuation, geometric properties, dispersion properties, polarization mode dispersion, cut-off wavelengths and mode field diameter; and for multimode fibres: attenuation, geometric properties, differential mode delay (DMD), numerical aperture and bandwidth, although the invention is not limited thereto. The geometric properties inter alia include: diameter, unroundness and concentricity of the various layers in the fibre, such as the core and the cladding, and of the protective layers surrounding the fibre. The dispersion properties inter alia include: zero dispersion (the wavelength at which the dispersion reaches the value zero), dispersion slope and dispersion at different wavelengths.

The present invention will be explained hereinafter by means of an example, in which connection it should be noted, however, that the example is only given by way of illustration and should not be construed as constituting any limitation of the invention.

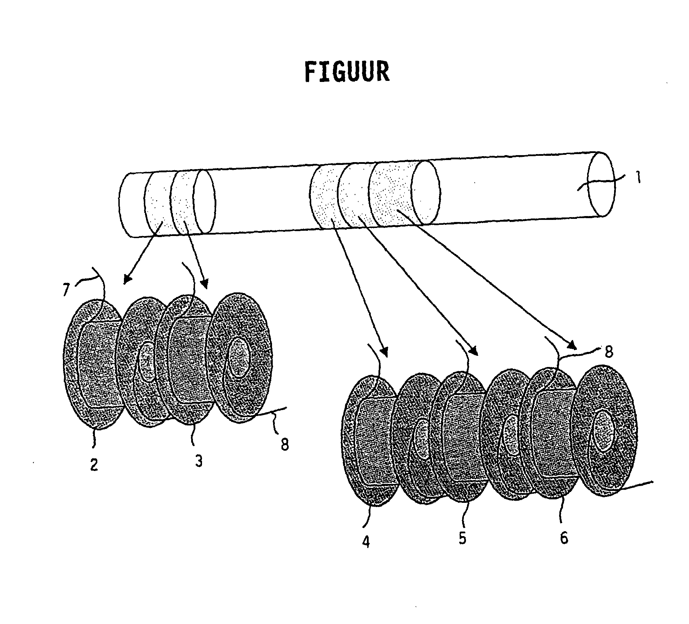

In the example, references are made to the figure, which figure schematically illustrates the present invention.

### Example.

Using a generally known method, for example a method as known from US patent No 6,260,510, an optical fibre is drawn from a rod-shaped preform 1, which optical fibre is subsequently distributed over a number of drums or coils 2, 3, 4, 5, 6. During said distribution, an electronic memory storage device records which position of the preform corresponds to the optical fibres wound on the various drums 2, 3, 4, 5, 6. Then the properties of the optical fibre 7 present on drum 2 are measured. A similar measurement of properties is carried out on the fibre 8 present on drum 6, for example. If the properties thus measured fall within a predetermined tolerance, said property will be assigned to each of the optical fibres that are wound on coils 3, 4 and 5. If the properties of the end portion of the optical fibre 7 on drum 2 have been measured, the measured properties will correspond to those of the starting portion of the fibre 8 present on drum 3.

## Claims

1. A method of characterising one or more properties of optical fibres obtained from an optical preform, **characterized in that** the method comprises the following steps:
i) drawing an optical fibre from the optical preform,
ii) subdividing the optical fibre from step i) into separate length portions by winding each of said separate length portions on a coil,
iii) encoding each coil from step ii), with each coil comprising a specific length portion of the original optical fibre from step i),
iv) measuring one or more properties of a length portion of an optical fibre whose code as registered in step iii) is known,
v) measuring one or more properties of a random length portion of an optical fibre other than the length portion from step iv), whose code as registered in step iii) is known,
vi) determining one or more properties of one or more of the length portions of optical fibres other than the length portions measured in accordance with steps iv) and v) through mathematical processing of the measuring results obtained in step iv) and the measuring results obtained in step v), and
vii) assigning properties to said other length portions from step vi) on the basis of the mathematically processed measuring data.

2. A method according to claim 1, **characterized in that** an electronic memory storage device is used in carrying out step iii) and/or step vi).

3. A method according to any one or more of the claims 1-2, **characterized in that** the optical fibre being drawn is wound on a coil while step i) is being carried out.

4. A method according to any one or more of the claims 1-3, **characterized in that** steps v)-vii) are substituted for a single step viii), which step viii) comprises the assigning of the properties measured in step iv) to another length portion whose code as registered in step iii) is known and which is adjacent to the length portion from step iv).

5. A method according to any one or more of the preceding claims 1-3, **characterized in that** the properties as measured in steps iv)-vi) are selected from attenuation, geometric properties, dispersion properties and polarization mode dispersion, for single-mode fibres, and from attenuation, geometric properties, differential mode delay (DMD), numerical aperture and bandwidth for multimode fibres.

6. A method according to claim 4, **characterized in that** the properties as measured in step viii) and step iv) are selected from geometric properties, cut-off wavelengths and mode field diameter for single-mode fibres, and from geometric properties and numerical aperture for multimode fibres.

## Patentansprüche

1. Verfahren zum Kennzeichnen einer oder mehrerer Eigenschaften von optischen Fasern, die aus einem optischen Vorformling erhalten werden, **dadurch gekennzeichnet, daß** das Verfahren die folgenden Schritte aufweist:
i) Ziehen einer optischen Faser aus dem optischen Vorformling,
ii) Unterteilen der optischen Faser aus Schritt i) in getrennte Längenabschnitte durch Wickeln jedes getrennten Längenabschnitts auf eine Spule,
iii) Kodieren jeder Spule aus Schritt ii), wobei jede Spule einen spezifischen Längenabschnitt der ursprünglichen optischen Faser aus Schritt i) aufweist,
iv) Messen einer oder mehrerer Eigenschaften eines Längenabschnitts einer optischen Faser, deren Code, der in Schritt iii) registriert wird, bekannt ist,
v) Messen einer oder mehrerer Eigenschaften eines zufälligen Längenabschnitts einer optischen Faser, der vom Längenabschnitt aus Schritt iv) verschieden ist, dessen Code, der in Schritt iii) registriert wird, bekannt ist,
vi) Bestimmen einer oder mehrerer Eigenschaften eines oder mehrerer der Längenabschnitte der optischen Fasern, die von den Längenabschnitten verschieden sind, die gemäß der Schritte iv) und v) gemessen werden, durch mathematische Verarbeitung der im Schritt iv) erhaltenen Meßergebnisse und der im Schritt v) erhaltenen Meßergebnisse, und
vii) Zuordnen von Eigenschaften zu den anderen Längenabschnitten aus Schritt vi) auf der Grundlage der mathematisch verarbeiteten Meßdaten.

2. Verfahren nach Anspruch 1, **dadurch gekennzeichnet, daß** bei der Ausführung des Schritts iii) und/oder des Schritts vi) eine elektronische Speichervorrichtung verwendet wird.

3. Verfahren nach Anspruch 1 oder 2, **dadurch gekennzeichnet, daß** die gezogene optische Faser auf eine Spule gewickelt wird, während der Schritt i) ausgeführt wird.

4. Verfahren nach einem der Ansprüche 1 bis 3, **dadurch gekennzeichnet, daß** die Schritte v)-vii) durch einen einzigen Schritt viii) ersetzt werden, wobei der Schritt viii) das Zuordnen der in Schritt iv) gemessenen Eigenschaften zu einem anderen Längenabschnitt aufweist, dessen Code, der in Schritt iii) registriert wird, bekannt ist und der an den Längenabschnitt aus Schritt iv) angrenzt.

5. Verfahren nach einem der vorhergehenden Ansprüche 1 bis 3, **dadurch gekennzeichnet, daß** die Eigenschaften, die in den Schritten iv)-vi) gemessen werden, für Einmodenfasern aus Dämpfung, geometrischen Eigenschaften, Dispersionseigenschaften und Polarisationsmodendispersion, und für Mehrmodenfasern aus Dämpfung, geometrischen Eigenschaften, Differentialmodenverzögerung (DMD), numerischer Apertur und Bandbreite ausgewählt werden.

6. Verfahren nach Anspruch 4, **dadurch gekennzeichnet, daß** die Eigenschaften, die in Schritt viii) und Schritt iv) gemessen werden, für Einmodenfasern aus geometrischen Eigenschaften, Grenzwellenlängen und Modenfelddurchmesser, und für Mehrmodenfasern aus geometrischen Eigenschaften und numerischer Apertur ausgewählt werden.

## Revendications

1. Procédé de caractérisation d'une ou plusieurs propriétés de fibres optiques obtenues à partir d'une préforme optique, le procédé étant **caractérisé en ce qu'**il comprend les opérations suivantes :
i) tirer une fibre optique à partir d'une préforme optique,
ii) subdiviser la fibre optique issue de l'opération i) en des parties de longueur distinctes en enroulant chacune desdites parties de longueur distinctes sur une bobine,
iii) coder chaque bobine issue de l'opération ii), chaque bobine comprenant une partie de longueur spécifique de la fibre optique initiale issue de l'opération i),
iv) mesurer une ou plusieurs propriétés d'une partie de longueur d'une fibre optique dont le code, tel qu'enregistré lors de l'opération iii), est connu,
v) mesurer une ou plusieurs propriétés d'une partie de longueur aléatoire d'une fibre optique autre que la partie de longueur issue de l'opération iv), dont le code, tel qu'enregistré dans l'opération iii), est connu,
vi) déterminer une ou plusieurs propriétés d'une ou plusieurs des parties de longueur de fibres optiques autres que les parties de longueur mesurées selon les opérations iv) et v) via un traitement mathématique des résultats de mesure obtenus lors de l'opération iv) et des résultats de mesure obtenus lors de l'opération v), et
vii) attribuer des propriétés auxdites autres parties de longueur issues de l'opération vi) sur la base des données de mesure traitées mathématiquement.

2. Procédé selon la revendication 1, **caractérisé en ce qu'**on utilise un dispositif de stockage en mémoire électronique lors de l'exécution de l'opération iii) et, ou bien, de l'opération vi).

3. Procédé selon la revendication 1 ou 2, **caractérisé en ce que** la fibre optique qui a été étirée est enroulée sur une bobine pendant l'exécution de l'opération i).

4. Procédé selon l'une quelconque des revendications 1 à 3, **caractérisé en ce que** les opérations v) à vii) sont remplacées par une unique opération viii), laquelle opération viii) comprend l'affectation des propriétés mesurées lors de l'opération iv) à une autre partie de longueur dont le code tel qu'enregistré lors de l'opération iii) est connu et qui est adjacente à la partie de longueur issue de l'opération iv).

5. Procédé selon l'une quelconque des revendications 1 à 3, **caractérisé en ce que** les propriétés telles que mesurées lors des opérations iv) à vi) sont sélectionnées parmi les suivantes, à savoir atténuation, propriétés géométriques, propriétés de dispersion, et dispersion de mode de polarisation, pour des fibres monomode et, pour des fibres multimode, atténuation, propriétés géométriques, retard de mode différentiel (DMD), ouverture numérique et largeur de bande.

6. Procédé selon la revendication 4, **caractérisé en ce que** les propriétés telles que mesurées lors de l'opération viii) et de l'opération iv) sont sélectionnées parmi les suivantes, à savoir propriétés géométriques, longueurs d'onde de coupure, et diamètre de champ de mode pour des fibre monomode, et, pour les fibres multimode, propriétés géométriques et ouverture numérique.
